# EUROPEAN PATENT APPLICATION

(11) **EP 4 751 619 A1**
(43) Date of publication of application: **03.06.2026**
(21) Application number: 24934687.5
(22) Date of filing: 22.07.2024
(51) Int. Cl.: A47J 31/10

(54) **COFFEE MAKER**

(30) Priority: 07.04.2024 CN 202410410323
(71) Applicant: Ningbo Haojia Electrical Appliances Co., Ltd., Yuyao City, Zhejiang Province 315000 (CN)
(72) Inventor: LUO, Weibiao, Ningbo, Zhejiang 315000 (CN); HUANG, Qingchu, Ningbo, Zhejiang 315000 (CN); DENG, Guoji, Ningbo, Zhejiang 315000 (CN); XU, Gang, Ningbo, Zhejiang 315000 (CN); HE, Zhijiang, Ningbo, Zhejiang 315000 (CN); LIANG, Zhibin, Ningbo, Zhejiang 315000 (CN)
(74) Representative: Plavsa, Olga
(86) International application number: PCT/CN2024/106683
(87) International publication number: WO 2025/213619

(57) **Abstract**

The disclosure relates to a coffee maker, which belongs to the field of home appliances. The coffee maker includes: a housing assembly (1) provided with a guide cavity (101); a bean grinder (2) provided on the housing assembly (1); a waterway assembly (3) provided on the housing assembly (1); a pressure brewing unit (4) detachably provided on the housing assembly (1) and being capable of moving along a guide cavity (101); and a power drive unit (5). The pressure brewing unit (4) is arranged adjacent to the bean grinder (2), and the pressure brewing unit (4) is in transmission connection with the power drive unit (5), which makes it easy for users to take down the pressure brewing unit (4) for cleaning and maintenance, thus improving convenience and hygiene of use. The power drive unit (5) is located at a bottom of the guide cavity (101) to provide power for the pressure brewing unit (4), thus ensuring stability and consistency of coffee brewing.

## Description

### CROSS-REFERENCE TO RELATED APPLICATION

This application claims priority to the Chinese Patent Application No. 202410410323.1 filed on April 7, 2024 and entitled "COFFEE MAKER," entire contents of which are incorporated herein by reference.

### TECHNICAL FIELD

The disclosure relates to the field of home appliances, in particular to a coffee maker.

### BACKGROUND

Due to compact structural design of a coffee maker, it is often faced with a predicament of cleaning up coffee powder residue after a brewing process. In the brewing process, the coffee powder may remain in every corner and hidden components, which may not only affect quality of coffee brewed next time, but also cause performance deterioration or failure of machines. However, due to the compact structure of the coffee maker, it is often difficult for users to completely clean up all of the residual coffee powder. This may require use of special cleaning tools or a complicated disassembly and reassembly process, which increases complexity and consumed time of cleaning operations.

### SUMMARY

On this basis, it is necessary to provide a coffee maker aimed at a problem that the coffee maker has a compact structure and it is difficult to clean coffee powder residue after brewing.

A coffee maker includes: a housing assembly provided with a guide cavity; a bean grinder provided on the housing assembly and located in the housing assembly; a waterway assembly provided on the housing assembly and configured to be communicated with a water source; a pressure brewing unit detachably provided on the housing assembly and being capable of moving along the guide cavity; and a power drive unit provided on the housing assembly and located at a bottom of the guide cavity. The pressure brewing unit has at least a first position and a second position relative to the housing assembly. When the pressure brewing unit is located at the first position, the pressure brewing unit is separated from the housing assembly, the waterway assembly and the power drive unit. When the pressure brewing unit is located at the second position, the pressure brewing unit is arranged adjacent to the bean grinder, the bean grinder is capable of providing coffee powder for the pressure brewing unit, and the pressure brewing unit is installed in a fitted manner with the housing assembly, is in transmission connection with the power drive unit, and is communicated with the waterway assembly, and the waterway assembly is configured to convey liquid into the pressure brewing unit and output liquid in the pressure brewing unit.

A coffee maker is provided in the disclosure, which effectively utilizes an internal space of the coffee maker by locating the bean grinder in the housing assembly, thus with a more compact overall structure and saved table space. The pressure brewing unit is detachable and can move along the guide cavity, which makes it easy for users to take down the pressure brewing unit for cleaning and maintenance, and improves convenience and hygiene of use. The pressure brewing unit has two positions relative to the housing assembly, namely the first position and the second position. When the pressure brewing unit is located at the first position, it is separated from the housing assembly, the waterway assembly and the power drive unit, which facilitates cleaning and maintenance. When the pressure brewing unit is located at the second position, it is adjacent to the bean grinder, so that coffee powder can be directly obtained, which makes a coffee making process more efficient and flexible. The power drive unit is located at the bottom of the guide cavity so as to provide power for the pressure brewing unit, thus ensuring stability and consistency of coffee brewing. The waterway assembly is responsible for conveying liquid into the pressure brewing unit and outputting it, thus realizing automation of the whole coffee making process. Adaptive installation of the pressure brewing unit and the housing assembly not only facilitates installation and disassembly of the pressure brewing unit, but also reduces a gap between assemblies, reduces accumulation of impurities and dirt, and facilitates maintenance of hygiene of the coffee maker. This coffee maker is reasonable in design and convenient to operate, which can meet needs of users for efficient, convenient and delicious coffee and improve user experience.

In one of embodiments, the pressure brewing unit includes a mounting housing, a transmission barrel, a powder carrier, a liquid outlet head assembly, a locking assembly and a powder scraping assembly. The mounting housing is detachably arranged on the housing assembly, the transmission barrel is rotatably arranged on the mounting housing, the transmission barrel is capable of being in transmission connection with the power drive unit, the powder carrier is movably arranged on the mounting housing and is capable of moving along the mounting housing, the powder carrier is in transmission connection with the transmission barrel, the powder carrier is provided with a water inlet channel which is in fluid communication with the waterway assembly, the liquid outlet head assembly is arranged on the mounting housing and opposite to the powder carrier, the liquid outlet head assembly is provided with a water passage channel which is in fluid communication with the waterway assembly, and the locking assembly is arranged on the mounting housing. The locking assembly is capable of being locked or unlocked with the powder carrier, the powder carrier is formed with a powder cavity for accommodating coffee powder or pushing the coffee powder out of the powder cavity, and the powder scraping assembly is rotatably arranged on the powder carrier. The mounting housing of the pressure brewing unit is detachable, which makes it easy for users to take down the pressure brewing unit for cleaning and maintenance, and improves convenience and hygiene of use. The powder carrier can move along the mounting housing, which enables users to compact coffee powder as needed, thus controlling taste and concentration of coffee and increasing flexibility of making coffee. The liquid outlet head assembly is arranged opposite to the powder carrier and the powder cavity can be formed for accommodating the coffee powder or pushing the coffee powder out. Such design ensures that the coffee powder can be effectively compacted, thus improving extraction efficiency and taste of coffee. The water inlet channel and the water passage channel are located in the powder carrier and the liquid outlet head assembly respectively, and can be communicated with the waterway assembly. Such design ensures that water can be effectively contacted with the coffee powder and fully extract flavor and aroma of coffee. The locking assembly can be locked or unlocked with the powder carrier, which ensures movement of the powder carrier during use so as to realize push-out and accommodation of the coffee powder. The powder scraping assembly is rotatably arranged on the powder carrier, which facilitates ensuring of uniform distribution and compaction of the coffee powder and improves uniformity and stability of coffee.

In one of the embodiments, the mounting housing includes a mounting shell, a first ejector rod and a mounting base. The first ejector rod and the mounting base are arranged on the mounting shell and at one side of the mounting shell, the liquid outlet head assembly is arranged on the mounting shell and at the other side of the mounting shell, the locking assembly is arranged on the mounting base, and the transmission cylinder is rotatably arranged on the mounting shell, the powder carrier is movably arranged on the mounting shell and is capable of moving along the mounting shell, the first ejector rod is arranged opposite to the powder scraping assembly. When the powder scraping assembly is abutted against the first ejector rod, the first ejector rod drives the powder scraping assembly to rotate, the powder scraping assembly includes a powder scraping frame, a scraper and a second ejector rod. The powder scraping frame is rotatably arranged on the powder carrier, the scraper is arranged on the powder scraping frame, and the second ejector rod is arranged on the powder scraping frame and opposite to the first ejector rod. The liquid outlet head assembly is located at one side of the mounting shell and the locking assembly is located on the mounting base, thus with a reasonable layout of respective assemblies of the pressure brewing unit, which facilitates operation and maintenance. The powder scraping frame, the scraper and the second ejector rod are configured to scrape coffee powder after the pressure brewing unit completes a brewing operation. The first ejector rod is arranged opposite to the powder scraping assembly and can drive the powder scraping assembly to rotate, and such design ensures that the coffee powder can be scraped. The powder carrier can move along the mounting shell, so that users can compact coffee powder, thereby controlling taste and concentration of coffee.

In one of the embodiments, the coffee maker further includes a water inlet joint arranged on the mounting housing and communicated with the powder carrier. By arranging the water inlet connector on the mounting housing and to be communicated with the powder carrier, water can be directly introduced into the pressure brewing unit. In this way, in making coffee, required amount of water can be automatically introduced into the pressure brewing unit through the coffee maker, which saves user's operation time and effort. By arranging the water inlet joint on the mounting housing and connecting it to the powder carrier, water sources can be directly introduced into the interior of the pressure brewer through this joint. In this way, when making coffee, the required amount of water can be automatically introduced into the pressure brewer by the coffee maker, saving the user's operation time and effort.

In one of the embodiments, the coffee maker further includes a connecting seat and a handle. The connecting seat is arranged on the mounting housing, and the handle is rotatably arranged on the connecting seat, and the handle can be locked or separated from the mounting housing when rotating relative to the connecting seat. With design of the connecting seat and the handle, the users can realize locking or separation of the pressure brewing unit through rotation of the handle, thus conveniently installing and disassembling the pressure brewing unit. Such an operation mode is simple and intuitive, so that the users do not need additional tools or complicated operation steps, which improves convenience of operations and user experience. Rotating design of the handle can effectively lock or separate the pressure brewing unit, thus ensuring stability and safety of the pressure brewing unit during use. When the handle is locked with the connecting seat, the pressure brewing unit can be firmly fixed to the housing assembly, so as to avoid accidental movement or falling off during coffee making and ensure safety of the users. The design of the connecting seat and the handle allows users to lock or disengage the pressure brewer by rotating the handle, thereby facilitating the installation and removal of the pressure brewer. This operation method is simple and intuitive, eliminating the need for users to use additional tools or follow complex steps, which improves operational convenience and user experience. The rotating design of the handle can effectively lock or disengage the pressure brewer, thus ensuring the stability and safety of the pressure brewer during use. When the handle is locked with the connecting seat, the pressure brewer can be firmly fixed on the housing assembly, preventing accidental movement or falling off during coffee making and ensuring user safety.

In one of the embodiments, the powder carrier includes an outer sleeve, a pressure-bearing inner core and a sliding block. The sliding block is arranged on the outer sleeve, the sliding block is movably arranged on the mounting housing and is capable of moving along the mounting housing, the pressure-bearing inner core is movably arranged in the outer sleeve, the outer sleeve has at least a first position, a second position and a third position, and the pressure-bearing inner core has at least a fourth position, a fifth position and a sixth position. When the outer sleeve is located at the first position, the pressure-bearing inner core is located at the fourth position, the pressure-bearing inner core and the outer sleeve form the powder cavity, the liquid outlet head assembly extends into the powder cavity, and a powder gap is formed between the liquid outlet head assembly and the pressure-bearing inner core. When the outer sleeve is located at the second position, the pressure-bearing inner core is located at the fifth position, the outer sleeve and the liquid outlet head assembly are arranged at an interval, the pressure-bearing inner core and the outer sleeve form the powder cavity, and the pressure-bearing inner core is locked with the locking assembly. When the outer sleeve is located at the third position, the pressure-bearing inner core is located at the sixth position, the outer sleeve and the liquid outlet head assembly are arranged at an interval, the pressure-bearing inner core is located at an opening of the outer sleeve, and the pressure-bearing inner core is locked with the locking assembly. The outer sleeve and the pressure-bearing inner core have a plurality of positions respectively, and can be switched between different positions. This design enables the pressure brewing unit to operate under different working conditions, so as to meet requirements of different types of coffee making, such as coffee making processes that require different pressures and amount of extrusion. When the outer sleeve is located at the first position, the pressure-bearing inner core is located at the fourth position, thus forming the powder cavity. This cavity is configured to accommodate coffee powder, and the coffee powder can be compacted by the liquid outlet head assembly to ensure required coffee concentration and taste during a brewing process. When the outer sleeve is located at the first position, the powder gap is formed between the liquid outlet head assembly and the pressure-bearing inner core. Coffee powder in this powder gap is limited so as to meet requirements of coffee making, and ensure uniform extrusion of coffee powder and smooth water outlet. When the outer sleeve is located at the second position or the third position, the pressure-bearing inner core is locked with the locking assembly. This design can ensure that the pressure-bearing inner core is locked and facilitates relative displacement of the pressure-bearing inner core and the outer sleeve. When the outer sleeve moves from the second position to the third position, the outer sleeve and the pressure-bearing inner core move relative to each other, and brewed coffee powder is pushed out from the powder cavity. Design of the powder carrier enables the pressure brewing unit to have versatility and flexibility and finish coffee making. Meanwhile, coffee powder can be pushed out, which presents higher degree of automation, improves making efficiency and quality of the coffee maker, and provides the users with richer and more personalized coffee experience.

In one of the embodiments, the pressure-bearing inner core includes a sliding column and a water outlet cover plate. The water outlet cover plate is arranged on the sliding column, the sliding column is slidably arranged on the outer sleeve, the water outlet cover plate is arranged on the sliding column, a water passage cavity is formed between the water outlet cover plate and the sliding column, and a water passage opening is formed on the outer sleeve. When the outer sleeve is located at the first position and the pressure-bearing inner core is located at the fourth position, the water passage cavity is communicated with the water passage opening. The water passage cavity is formed between the water outlet cover plate and the sliding column, and this water passage cavity is configured to guide liquid. When the outer sleeve is located at the first position and the pressure-bearing inner core is located at the fourth position, the water passage cavity is communicated with the water passage opening on the outer sleeve. Such design ensures that water can smoothly flow through the water passage opening and into the pressure brewing unit when the pressure brewing unit operates, thus ensuring uniform brewing and output of coffee. Provision of the water outlet cover plate can effectively control flow through the water passage cavity.

In one of the embodiments, the coffee maker further includes a water inlet joint arranged on the outer sleeve and/or the sliding block. With provision of the water inlet joint, the outer sleeve can be effectively connected with the waterway assembly. With such design, it can be ensured that the water source is closely connected with a channel inside the pressure brewing unit, so as to prevent water from leaking or out of control during flowing, thus ensuring a smooth coffee making process. Addition of the water inlet joint makes installation and maintenance of the pressure brewing unit easier. The users can easily connect the waterway assembly with the pressure brewing unit, and when cleaning or maintenance is needed, the water inlet joint also can be quickly disassembled, which facilitates related operations.

In one of the embodiments, the bean grinder includes a bean grinding frame, a driving assembly, a movable grinding head, an external grinding head and a powder discharging bracket. The bean grinding frame is arranged on the housing assembly and located in the housing assembly, the driving assembly is arranged on the bean grinding frame, the movable grinding head is arranged on the driving assembly, the external grinding head is rotatably arranged on the bean grinding frame, and the external grinding head is arranged to surround the movable grinding head, a bean grinding cavity is formed between the external grinding head and the movable grinding head, the bean grinding frame, the movable grinding head and the external grinding head are enclosed to form a powder passage cavity, the powder passage cavity is communicated with the bean grinding cavity, and the bean grinding frame is provided with a powder outlet. Provision of the movable grinding head and the external grinding head enables a bean grinding process to be more efficient. The movable grinding head and the external grinding head cooperate to complete fine grinding operations, thus grinding coffee beans into desired powder and ensuring taste and aroma of coffee. With provision of the bean grinding cavity and the powder passage cavity, quality of bean grinding can be effectively controlled. In a process of bean grinding, bean powder can be ground and screened in the bean grinding cavity to ensure that quality of final coffee powder meets requirements, and after grinding, final coffee powder is transported to the powder passage cavity to ensure the taste and quality of coffee. Tight combination of the bean grinding frame, the movable grinding head and the external grinding head makes a structure of the bean grinder more compact. Such design not only saves space, but also improves overall stability and reliability, which facilitates long-term stable operations of the coffee maker.

In one of the embodiments, the driving assembly includes a driving member and a transmission member. The driving member is arranged on the bean grinding frame, and the transmission member is in transmission connection with the driving member and the movable grinding head respectively. Arrangement of the driving member on the bean grinding frame provides firm support, thus ensuring stability and reliability of a transmission process. The transmission member is connected with the driving part and the movable grinding head, which effectively transmits power, so that the bean grinder can operate efficiently and improve performance of the coffee maker. Design of the driving member and the transmission member makes the whole driving assembly compact and does not occupy too much space. Such compact design facilitates overall layout of the coffee maker, making its appearance more concise and beautiful and also improving stability and reliability of the device.

In one of the embodiments, the external grinding head is provided with a grinding through hole, the movable grinding head penetrates through the grinding through hole, a grinding part is formed at an inner side of the external grinding head, a gear part is formed at an outer side of the external grinding head, and the coffee maker further includes a bean plucking mechanism, and the bean plucking mechanism includes a transmission tooth and a bean plucking rod, and the bean plucking mechanism is in transmission connection with the gear part. Design of the grinding part of the external grinding head and the movable grinding head ensures that beans can be uniformly ground in the grinding through hole. This can ensure uniformity of bean grinding and make coffee taste more consistent. With transmission connection of the gear part of the external grinding head and the bean plucking mechanism, automatic bean plucking in a bean bin can be realized.

In one of the embodiments, the coffee maker further includes a powder discharging bracket, and the powder discharging bracket is movably arranged on the bean grinding frame and is adjacent to the powder outlet and the pressure brewing unit respectively. With the powder discharging bracket being located on the bean grinding frame and adjacent to the powder outlet, produced coffee powder can be effectively collected. This can prevent the coffee powder from scattering on other components or operation surfaces and keep an operation area clean and tidy. Movable arrangement of the powder discharging bracket makes cleaning more convenient. The users can easily remove the powder discharging bracket for cleaning, and then reinstall it. This can reduce trouble in a cleaning process and improve user experience. The powder discharging bracket is adjacent to the pressure brewing unit, which can directly convey the coffee powder into the brewer, thus avoiding waste of powder in a transfer process. This design not only improves utilization rate of coffee powder, but also reduces possible waste in a cleaning operations.

In one of the embodiments, the powder discharging bracket includes a rotating frame, a first top plate, a second top plate and a spring. The rotating frame is movably arranged on the bean grinding frame, the first top plate and the second top plate are arranged on the rotating frame and are located at two sides of the rotating frame, and the first top plate and the second top plate are capable of being respectively abutted against the pressure brewing unit when the pressure brewing unit moves on the housing assembly. By movably arranging the rotating frame on the bean grinding frame, a stable supporting platform can be provided. The first top plate and the second top plate are arranged on the rotating frame and located at both sides of the rotating frame, which can effectively adapt to movement of the pressure brewing unit. When the pressure brewing unit moves on the housing assembly, the first top plate and the second top plate can be respectively abutted against the pressure brewing unit, thus ensuring that the powder discharging bracket rotates under pushing of the pressure brewing unit, avoiding interference and ensuring that the coffee powder can be accurately transported into the pressure brewing unit. Provision of the spring can provide appropriate elastic support and ensure that it can automatically reset when rotating.

In one of the embodiments, the housing assembly includes a housing body and a cover. The housing body is provided with a guide cavity, the cover is arranged on the housing body, the cover is arranged at an opening of the guide cavity. As a main part, the housing body provides structural support and basic framework for the whole coffee maker. The housing body is provided with the guide cavity, which provides fixing and guiding functions for other assemblies. As a component covering on the housing body, the cover can effectively protect internal mechanical structures and parts and enhance overall structural integrity. Provision of the guide cavity enables the housing assembly to effectively guide installation and movement of other assemblies. This facilitates ensuring that respective assemblies are at correct positions and ensures normal operations of the coffee maker. The cover is arranged at the opening of the guide cavity, which can further fix and protect assemblies in the guide cavity from accidental movement or damage.

In one of the embodiments, the waterway assembly includes a water inlet assembly, a heating assembly, a water outlet assembly and a water outlet head. The water inlet assembly is connected with the heating assembly, the heating assembly is respectively connected with the pressure brewing unit and the water outlet assembly, and the water outlet head is respectively connected with the pressure brewing unit and the water outlet assembly through pipelines. The water inlet module is responsible for introducing water into a coffee maker system, and the heating module heats the water to ensure that a water temperature reaches an appropriate brewing temperature. Such design can effectively control flow and temperature of water, thus ensuring brewing quality and taste of coffee. The heating module is not only connected with the pressure brewing unit, but also connected with the water outlet module, which makes the heating module not only provide a heated water source for the pressure brewing unit, but also provide water with a suitable temperature for the water outlet assembly, thus realizing multifunctional waterway design. The water outlet head is respectively connected with the pressure brewing unit and the water outlet assembly through the pipelines, and such design can ensure smooth water flow and no leakage. Reasonable layout of pipeline connection can effectively avoid water flow out of control and thus ensure the normal operations of the coffee maker.

In one of the embodiments, the coffee maker further includes a water tank, and the water tank is detachably arranged on the housing assembly and is communicated with the waterway assembly. By detachably arranging the water tank on the housing assembly, the users can easily disassemble the water tank to supplement and clean the water source. Such design makes it unnecessary for the users to frequently move the whole coffee maker or use an external container to add water, which improves convenience and comfort of the users. Through connection with the waterway assembly, the water tank provides the water source required by the coffee maker. As an independent module, cleaning and maintenance of the water tank can be facilitated. The users can regularly clean interior of the water tank, so as to avoid accumulation of scale and impurities, maintain purity of water, and prolong service life of the coffee maker.

In one of the embodiments, the coffee maker further includes a control assembly, and the control assembly is arranged on the housing assembly and is electrically connected with the bean grinder, the waterway assembly, the pressure brewing unit and the power drive unit. By electrically connecting the control assembly with the bean grinder, the waterway assembly, the pressure brewing unit and the power drive unit, unified control of the whole coffee maker system can be realized. This integrated design simplifies operations of the coffee maker, and the user can control all of functions of the coffee maker only by setting the control assembly, which improves convenience of use and simplicity of operation.

In one of the embodiments, the coffee maker further includes a switch, and the switch is arranged on the housing assembly and is capable of being abutted against or separated from the pressure brewing unit. The switch is arranged on the housing assembly, so that the user can easily determine whether the pressure brewing unit is installed in place through the switch.

### BRIEF DESCRIPTION OF DRAWINGS

FIG. 1 is a perspective view of a coffee maker according to the disclosure;
FIG. 2 is a first exploded view of a coffee maker according to the disclosure;
FIG. 3 is a second exploded view of a coffee maker according to the disclosure;
FIG. 4 is a third exploded view of a coffee maker according to the disclosure;
FIG. 5 is a fourth exploded view of a coffee maker according to the disclosure;
FIG. 6 is a fifth exploded view of a coffee maker according to the disclosure;
FIG. 7 is a first perspective view of a bean grinder according to the disclosure;
FIG. 8 is a second perspective view of a bean grinder according to the disclosure;
FIG. 9 is a first sectional view of a bean grinder according to the disclosure;
FIG. 10 is a second sectional view of a bean grinder according to the disclosure;
FIG. 11 is a first exploded view of a bean grinder according to the disclosure;
FIG. 12 is a second exploded view of a bean grinder according to the disclosure;
FIG. 13 is a perspective view of a part of a structure of a bean grinder according to the disclosure;
FIG. 14 is a perspective view of a pressure brewing unit according to the disclosure;
FIG. 15 is a sectional view of a pressure brewing unit according to the disclosure;
FIG. 16 is a perspective view of a part of a structure of a pressure brewing unit according to the disclosure;
FIG. 17 is an exploded view of a part of a structure of a pressure brewing unit according to the disclosure;
FIG. 18 is a perspective view of a powder carrier according to the disclosure;
FIG. 19 is a sectional view of a powder carrier according to the disclosure;
FIG. 20 is a perspective view of a powder scraping assembly according to the disclosure;
FIG. 21 is a first perspective view of a waterway assembly according to the disclosure;
FIG. 22 is a second perspective view of a waterway assembly according to the disclosure; and
FIG. 23 is a third perspective view of a waterway assembly according to the disclosure.

Correspondence between reference numerals and component names is as follows.
1 Housing Assembly, 11 Housing Body, 12 Cover, 101 Guide Cavity;
2 Bean Grinder, 21 Bean Grinding Frame, 22 Driving Assembly, 221 Driving Member, 222 Transmission Member, 23 Movable Grinding Heads, 24 External Grinding Head, 241 Grinding Part, 242 Gear Part, 2401 Grinding Through Holes, 25 Bean Plucking Mechanisms, 251 Transmission Tooth, 252 Bean Plucking Rod, 26 Powder Discharging Bracket, 261 Rotating Frame, 262 First Top Plate, 263 Second Top Plate, 264 Spring, 201 Bean Grinding Cavity, 202 Powder Passage Cavity, 203 Powder Outlet;
3 Waterway Assembly, 31 Water Inlet Assembly, 32 Heating Assembly, 33 Water Outlet Assembly, 34 Water Outlet Head;
4 Pressure Brewing Unit, 41 Mounting Housing, 411 Mounting Shell, 412 First Ejector Rod, 413 Mounting Base, 42 Transmission Barrel, 43 Powder Carrier, 431 Outer Sleeve, 432 Pressure-bearing Inner Core, 4321 Sliding Column, 4322 Water Outlet Cover Plate, 433 Sliding Block, 434 Water Inlet Joint, 44 Liquid Outlet Head Assembly, 45 Locking Assembly, 46 Powder Scraping Assembly, 461 Powder Scraping Frame, 462 Scraper, 463 Second Ejector Pin, 47 Water Inlet Joint, 48 Connecting Seat, 49 Handle, 401 Powder Cavity, 402 Water Passage Cavity, 403 Water Passage Opening.
5 Power Drive Unit;
6 Water Tank;
7 Control Assembly;
8 Switch.

### DESCRIPTION OF EMBODIMENTS

In order to understand above objects, features and advantages of the disclosure more clearly, the disclosure will be described in further detail with reference to the attached drawings and detailed description. It should be noted that the embodiments of the present disclosure and features in the embodiments can be combined mutually in the case of no conflict.

In following description, many specific details are set forth in order to fully understand the present disclosure. However, the present disclosure can be implemented in other ways than those described herein, and therefore, the protection scope of the present disclosure is not limited by specific embodiments disclosed below.

The coffee maker according to some embodiments of the present disclosure is described with reference to the accompanying drawings.

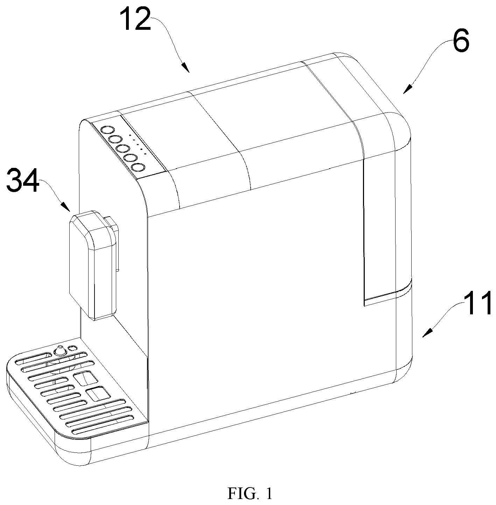

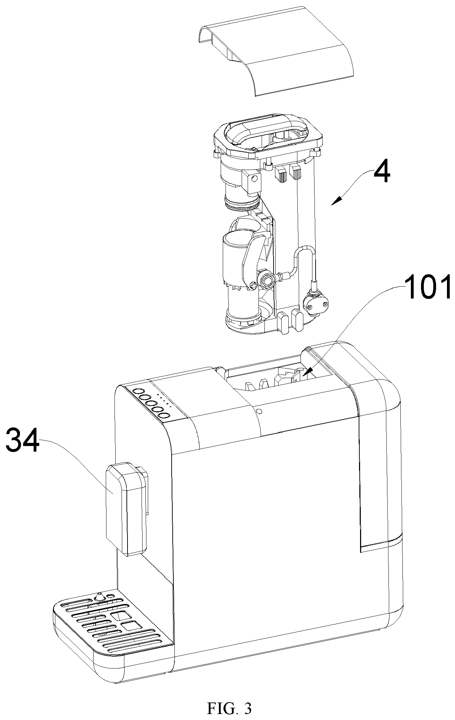

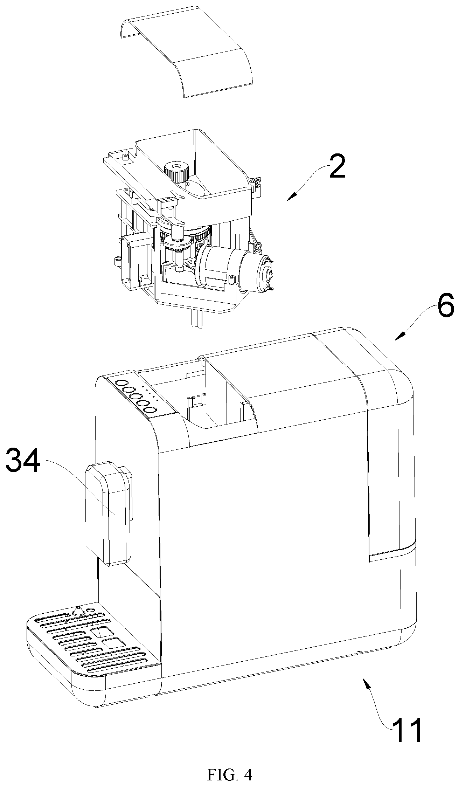

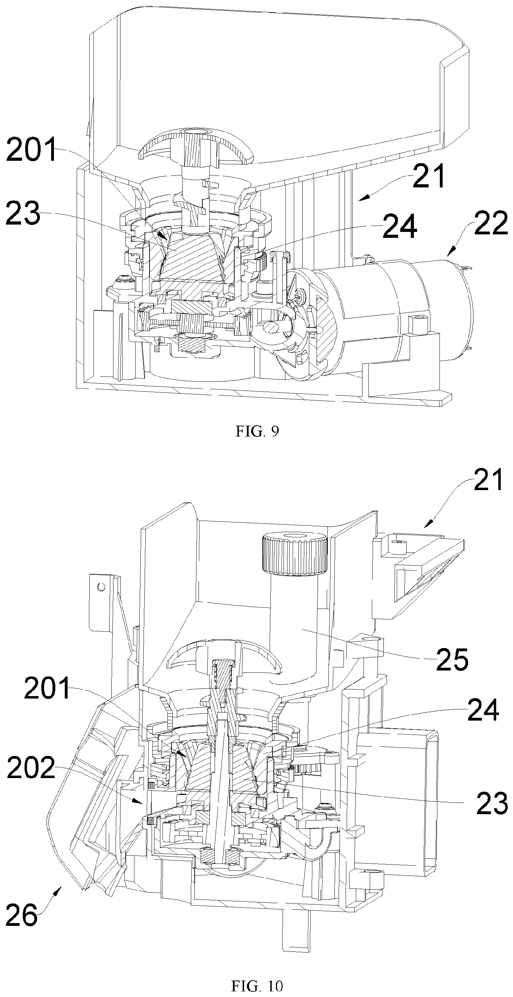

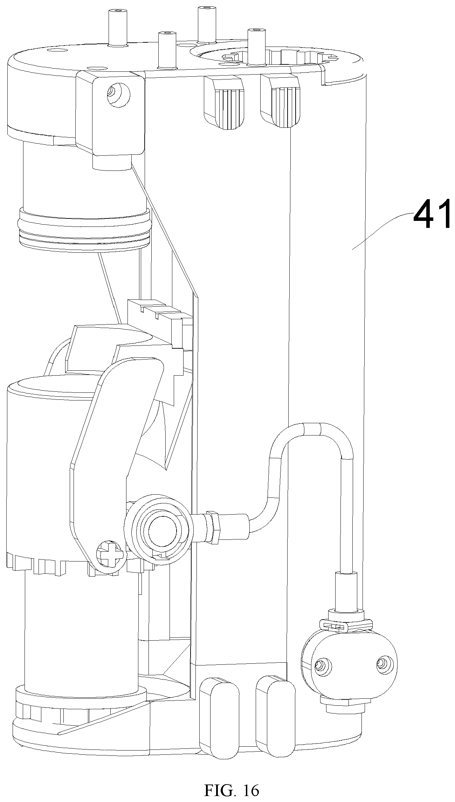

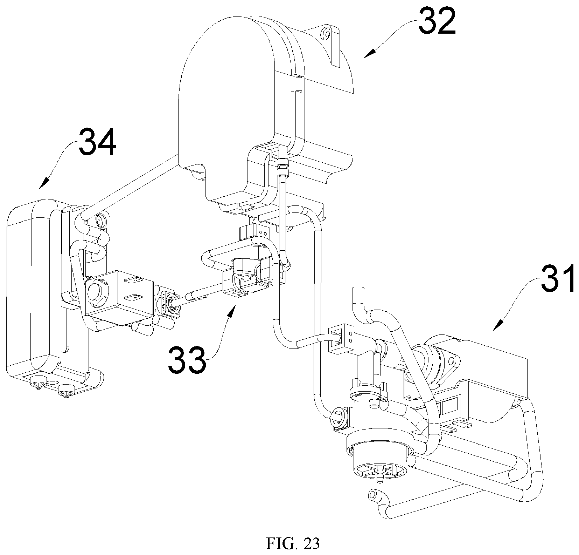

As shown in FIGS. 1 to 23, a coffee maker is disclosed in this embodiment, which includes: a housing assembly 1 provided with a guide cavity 101; a bean grinder 2 provided on the housing assembly 1 and located in the housing assembly 1; a waterway assembly 3 provided on the housing assembly 1 and configured to be communicated with a water source; a pressure brewing unit4 detachably provided on the housing assembly 1 and being capable of moving along the guide cavity 101; and a power drive unit 5 provided on the housing assembly 1 and located at a bottom of the guide cavity 101. The pressure brewing unit4 has at least a first position and a second position relative to the housing assembly. When the pressure brewing unit4 is located at the first position, the pressure brewing unit4 is separated from the housing assembly 1, the waterway assembly 3 and the power drive unit 5. When the pressure brewing unit4 is located at the second position, the pressure brewing unit4 is arranged adjacent to the bean grinder 2, the bean grinder 2 is capable of providing coffee powder for the pressure brewing unit4, and the pressure brewing unit4 is installed in a fitted manner with the housing assembly 1, is in transmission connection with the power drive unit 5, and is communicated with the waterway assembly 3, and the waterway assembly 3 is configured to convey liquid into the pressure brewing unit4 and output liquid in the pressure brewing unit4.

A coffee maker is provided in the disclosure, which effectively utilizes an internal space of the coffee maker by locating the bean grinder 2 in the housing assembly 1, thus with a more compact overall structure and saved table space. The pressure brewing unit4 is detachable and can move along the guide cavity 101, which makes it easy for users to take down the pressure brewing unit4 for cleaning and maintenance, and improves convenience and hygiene of use. The pressure brewing unit4 has two positions relative to the housing assembly 1, namely the first position and the second position. When the pressure brewing unit4 is located at the first position, it is separated from the housing assembly 1, the waterway assembly 3 and the power drive unit 5, which facilitates cleaning and maintenance. When the pressure brewing unit4 is located at the second position, it is adjacent to the bean grinder 2, so that coffee powder can be directly obtained, which makes a coffee making process more efficient and flexible. The power drive unit 5 is located at the bottom of the guide cavity 101 so as to provide power for the pressure brewing unit4, thus ensuring stability and consistency of coffee brewing. The waterway assembly 3 is responsible for conveying liquid into the pressure brewing unit4 and outputting it, thus realizing automation of the whole coffee making process. Adaptive installation of the pressure brewing unit4 and the housing assembly 1 not only facilitates installation and disassembly of the pressure brewing unit4, but also reduces a gap between assemblies, reduces accumulation of impurities and dirt, and facilitates maintenance of hygiene of the coffee maker. This coffee maker is reasonable in design and convenient to operate, which can meet needs of users for efficient, convenient and delicious coffee and improve user experience.

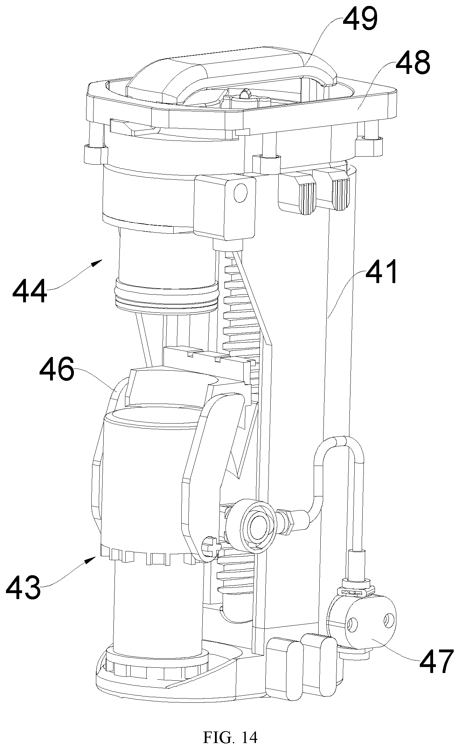

As shown in FIGS. 14 to 29, in addition to the features of the above embodiment, it is further defined in this embodiment that the pressure brewing unit4 includes a mounting housing 41, a transmission barrel 42, a powder carrier 43, a liquid outlet head assembly 44, a locking assembly 45 and a powder scraping assembly 46. The mounting housing 41 is detachably arranged on the housing assembly 1, the transmission barrel 42 is rotatably arranged on the mounting housing 41, the transmission barrel 42 is capable of being in transmission connection with the power drive unit 5, the powder carrier 43 is movably arranged on the mounting housing 41 and is capable of moving along the mounting housing 41, the powder carrier 43 is in transmission connection with the transmission barrel 42, the powder carrier 43 is provided with a water inlet channel which is in fluid communication with the waterway assembly 3, the liquid outlet head assembly 44 is arranged on the mounting housing 41 and opposite to the powder carrier 43, the liquid outlet head assembly 44 is provided with a water passage channel which is in fluid communication with the waterway assembly 3, and the locking assembly 45 is arranged on the mounting housing 41. The locking assembly 45 is capable of being locked or unlocked with the powder carrier 43, the powder carrier 43 is formed with a powder cavity 401 for accommodating coffee powder or pushing the coffee powder out of the powder cavity 401, and the powder scraping assembly 46 is rotatably arranged on the powder carrier 43. The mounting housing 41 of the pressure brewing unit4 is detachable, which makes it easy for users to take down the pressure brewing unit for cleaning and maintenance, and improves convenience and hygiene of use. The powder carrier 43 can move along the mounting housing 41, which enables users to compact coffee powder as needed, thus controlling taste and concentration of coffee and increasing flexibility of making coffee. The liquid outlet head assembly 44 is arranged opposite to the powder carrier 43 and the powder cavity 401 can be formed for accommodating the coffee powder or pushing the coffee powder out. Such design ensures that the coffee powder can be effectively compacted, thus improving extraction efficiency and taste of coffee. The water inlet channel and the water passage channel are located in the powder carrier 43 and the liquid outlet head assembly 44 respectively, and can be communicated with the waterway assembly 3. Such design ensures that water can be effectively contacted with the coffee powder and fully extract flavor and aroma of coffee. The locking assembly 45 can be locked or unlocked with the powder carrier 43, which ensures movement of the powder carrier 43 during use so as to realize push-out and accommodation of the coffee powder. The powder scraping assembly 46 is rotatably arranged on the powder carrier 43, which facilitates ensuring of uniform distribution and compaction of the coffee powder and improves uniformity and stability of coffee.

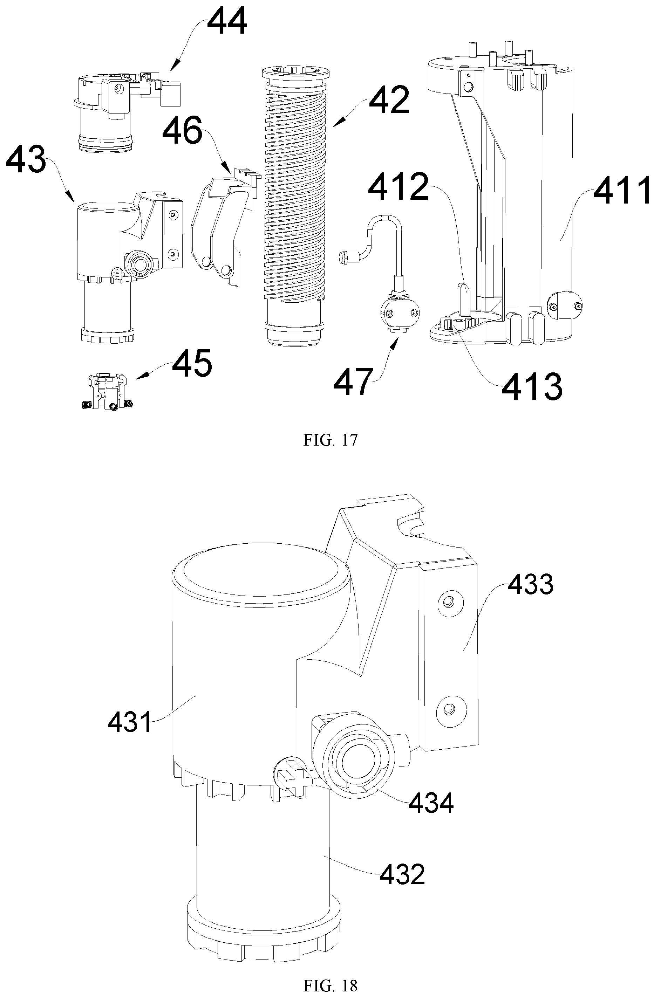

As shown in FIG. 17, in addition to features of the above embodiment, it is further defined in this embodiment that the mounting housing 41 includes a mounting shell 411, a first ejector rod 412 and a mounting base 413. The first ejector rod 412 and the mounting base 413 are arranged on the mounting shell 411 and at one side of the mounting shell 411, the liquid outlet head assembly 44 is arranged on the mounting shell 411 and at the other side of the mounting shell 411, the locking assembly 45 is arranged on the mounting base 413, and the transmission cylinder 42 is rotatably arranged on the mounting shell 411, the powder carrier 43 is movably arranged on the mounting shell 411 and is capable of moving along the mounting shell 411, the first ejector rod 412 is arranged opposite to the powder scraping assembly 46. When the powder scraping assembly 46 is abutted against the first ejector rod 412, the first ejector rod 412 drives the powder scraping assembly 46 to rotate, the powder scraping assembly 46 includes a powder scraping frame 461, a scraper 462 and a second ejector rod 463. The powder scraping frame 461 is rotatably arranged on the powder carrier 43, the scraper 462 is arranged on the powder scraping frame 461, and the second ejector rod 463 is arranged on the powder scraping frame 461 and opposite to the first ejector rod 412. The liquid outlet head assembly 44 is located at one side of the mounting shell 411 and the locking assembly 45 is located on the mounting base 413, thus with a reasonable layout of respective assemblies of the pressure brewing unit, which facilitates operation and maintenance. The powder scraping frame 461, the scraper 462 and the second ejector rod 463 are configured to scrape coffee powder after the pressure brewing unit completes a brewing operation. The first ejector rod 412 is arranged opposite to the powder scraping assembly 46 and can drive the powder scraping assembly 46 to rotate, and such design ensures that the coffee powder can be scraped. The powder carrier 43 can move along the mounting shell 411, so that users can compact coffee powder, thereby controlling taste and concentration of coffee.

As shown in FIG. 17, in addition to features of the above embodiment, it is further defined in this embodiment that the coffee maker further includes a water inlet joint 47 arranged on the mounting housing 41 and communicated with the powder carrier 43. By arranging the water inlet connector 47 on the mounting housing 41 and to be communicated with the powder carrier 43, water can be directly introduced into the pressure brewing unit. In this way, in making coffee, required amount of water can be automatically introduced into the pressure brewing unit through the coffee maker, which saves user's operation time and effort.

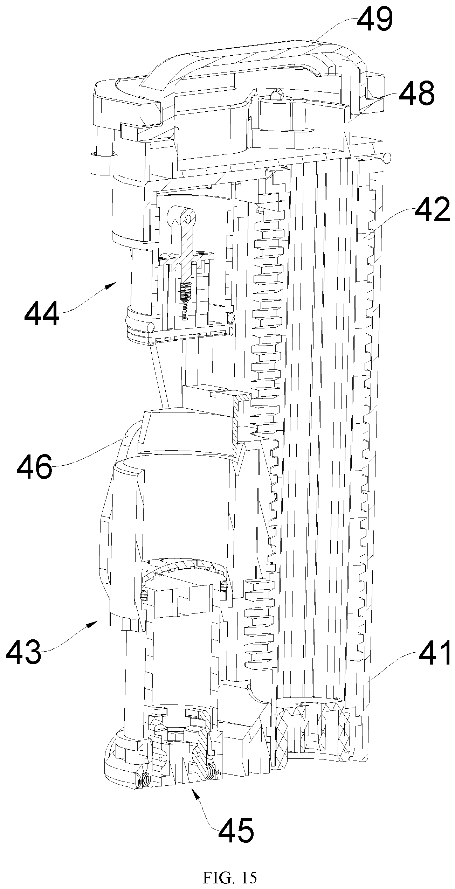

As shown in FIGS. 14 and 15, in addition to features of the above embodiment, it is further defined in this embodiment that the coffee maker further includes a connecting seat 48 and a handle 49. The connecting seat 48 is arranged on the mounting housing 41, and the handle 49 is rotatably arranged on the connecting seat 48, and the handle 49 can be locked or separated from the mounting housing 41 when rotating relative to the connecting seat 48. With design of the connecting seat 48 and the handle 49, the users can realize locking or separation of the pressure brewing unit through rotation of the handle, thus conveniently installing and disassembling the pressure brewing unit. Such an operation mode is simple and intuitive, so that the users do not need additional tools or complicated operation steps, which improves convenience of operations and user experience. Rotating design of the handle 49 can effectively lock or separate the pressure brewing unit, thus ensuring stability and safety of the pressure brewing unit during use. When the handle is locked with the connecting seat, the pressure brewing unit can be firmly fixed to the housing assembly 1, so as to avoid accidental movement or falling off during coffee making and ensure safety of the users.

As shown in FIGS. 17, 18 and 19, in addition to features of the above embodiment, it is further defined in this embodiment that the powder carrier 43 includes an outer sleeve 431, a pressure-bearing inner core 432 and a sliding block 433. The sliding block 433 is arranged on the outer sleeve 431, the sliding block 433 is movably arranged on the mounting housing 41 and is capable of moving along the mounting housing 41, the pressure-bearing inner core 432 is movably arranged in the outer sleeve 431, the outer sleeve 431 has at least a first position, a second position and a third position, and the pressure-bearing inner core 432 has at least a fourth position, a fifth position and a sixth position. When the outer sleeve 431 is located at the first position, the pressure-bearing inner core 432 is located at the fourth position, the pressure-bearing inner core 432 and the outer sleeve 431 form the powder cavity 401, the liquid outlet head assembly 44 extends into the powder cavity 401, and a powder gap is formed between the liquid outlet head assembly 44 and the pressure-bearing inner core 432. When the outer sleeve 431 is located at the second position, the pressure-bearing inner core 432 is located at the fifth position, the outer sleeve 431 and the liquid outlet head assembly 44 are arranged at an interval, the pressure-bearing inner core 432 and the outer sleeve 431 form the powder cavity 401, and the pressure-bearing inner core 432 is locked with the locking assembly 45. When the outer sleeve 431 is located at the third position, the pressure-bearing inner core 432 is located at the sixth position, the outer sleeve 431 and the liquid outlet head assembly 44 are arranged at an interval, the pressure-bearing inner core 432 is located at an opening of the outer sleeve 431, and the pressure-bearing inner core 432 is locked with the locking assembly 45. The outer sleeve 431 and the pressure-bearing inner core 432 have a plurality of positions respectively, and can be switched between different positions. This design enables the pressure brewing unit4 to operate under different working conditions, so as to meet requirements of different types of coffee making, such as coffee making processes that require different pressures and amount of extrusion. When the outer sleeve 431 is located at the first position, the pressure-bearing inner core 432 is located at the fourth position, thus forming the powder cavity 401. This cavity is configured to accommodate coffee powder, and the coffee powder can be compacted by the liquid outlet head assembly 44 to ensure required coffee concentration and taste during a brewing process. When the outer sleeve 431 is located at the first position, the powder gap is formed between the liquid outlet head assembly 44 and the pressure-bearing inner core 432. Coffee powder in this powder gap is limited so as to meet requirements of coffee making, and ensure uniform extrusion of coffee powder and smooth water outlet. When the outer sleeve 431 is located at the second position or the third position, the pressure-bearing inner core 432 is locked with the locking assembly 45. This design can ensure that the pressure-bearing inner core 432 is locked and facilitates relative displacement of the pressure-bearing inner core 432 and the outer sleeve 431. When the outer sleeve 431 moves from the second position to the third position, the outer sleeve 431 and the pressure-bearing inner core 432 move relative to each other, and brewed coffee powder is pushed out from the powder cavity 401. Design of the powder carrier 43 enables the pressure brewing unit4 to have versatility and flexibility and finish coffee making. Meanwhile, coffee powder can be pushed out, which presents higher degree of automation, improves making efficiency and quality of the coffee maker, and provides the users with richer and more personalized coffee experience.

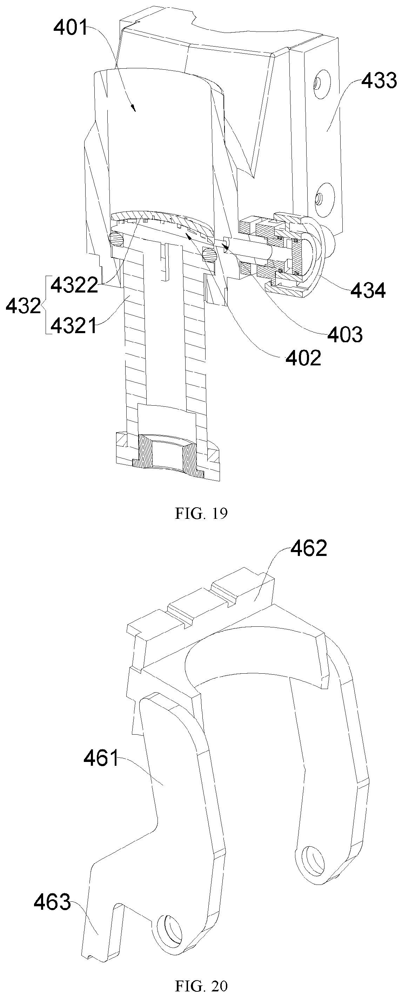

As shown in FIG. 19, in addition to features of the above embodiment, it is further defined in this embodiment that the pressure-bearing inner core 432 includes a sliding column 4321 and a water outlet cover plate 4322. The water outlet cover plate 4322 is arranged on the sliding column 4321, the sliding column 4321 is slidably arranged on the outer sleeve 431, the water outlet cover plate 4322 is arranged on the sliding column 4321, a water passage cavity 402 is formed between the water outlet cover plate 4322 and the sliding column 4321, and a water passage opening 403 is formed on the outer sleeve 431. When the outer sleeve 431 is located at the first position and the pressure-bearing inner core 432 is located at the fourth position, the water passage cavity 402 is communicated with the water passage opening 403. The water passage cavity 402 is formed between the water outlet cover plate 4322 and the sliding column 4321, and this water passage cavity 402 is configured to guide liquid. When the outer sleeve 431 is located at the first position and the pressure-bearing inner core 432 is located at the fourth position, the water passage cavity 402 is communicated with the water passage opening 403 on the outer sleeve 431. Such design ensures that water can smoothly flow through the water passage opening 403 and into the pressure brewing unit when the pressure brewing unit operates, thus ensuring uniform brewing and output of coffee. Provision of the water outlet cover plate 4322 can effectively control flow through the water passage cavity 402.

As shown in FIGS. 18 and 19, in addition to the features of the above embodiment, it is further defined in this embodiment that the coffee maker further includes a water inlet joint 434 arranged on the outer sleeve 431 and/or the sliding block 433. With provision of the water inlet joint 434, the outer sleeve 431 can be effectively connected with the waterway assembly 3. With such design, it can be ensured that the water source is closely connected with a channel inside the pressure brewing unit4, so as to prevent water from leaking or out of control during flowing, thus ensuring a smooth coffee making process. Addition of the water inlet joint 434 makes installation and maintenance of the pressure brewing unit easier. The users can easily connect the waterway assembly 3 with the pressure brewing unit4, and when cleaning or maintenance is needed, the water inlet joint 434 also can be quickly disassembled, which facilitates related operations.

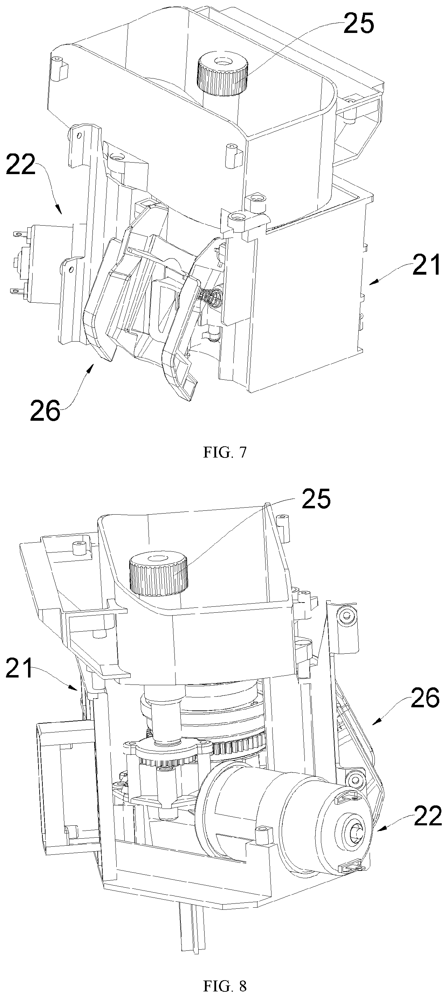

As shown in FIGS. 7 to 13, in addition to features of the above embodiment, it is further defined in this embodiment that the bean grinder 2 includes a bean grinding frame 21, a driving assembly 22, a movable grinding head 23, an external grinding head 24 and a powder discharging bracket 26. The bean grinding frame 21 is arranged on the housing assembly 1 and located in the housing assembly 1, the driving assembly 22 is arranged on the bean grinding frame 21, the movable grinding head 23 is arranged on the driving assembly 22, the external grinding head 24 is rotatably arranged on the bean grinding frame 21, and the external grinding head 24 is arranged to surround the movable grinding head 23, a bean grinding cavity 201 is formed between the external grinding head 24 and the movable grinding head 23, the bean grinding frame 21, the movable grinding head 23 and the external grinding head 24 are enclosed to form a powder passage cavity 202, the powder passage cavity 202 is communicated with the bean grinding cavity 201, and the bean grinding frame 21 is provided with a powder outlet 203. Provision of the movable grinding head 23 and the external grinding head 24 enables a bean grinding process to be more efficient. The movable grinding head 23 and the external grinding head 24 cooperate to complete fine grinding operations, thus grinding coffee beans into desired powder and ensuring taste and aroma of coffee. With provision of the bean grinding cavity 201 and the powder passage cavity 202, quality of bean grinding can be effectively controlled. In a process of bean grinding, bean powder can be ground and screened in the bean grinding cavity 201 to ensure that quality of final coffee powder meets requirements, and after grinding, final coffee powder is transported to the powder passage cavity 202 to ensure the taste and quality of coffee. Tight combination of the bean grinding frame 21, the movable grinding head 23 and the external grinding head 24 makes a structure of the bean grinder more compact. Such design not only saves space, but also improves overall stability and reliability, which facilitates long-term stable operations of the coffee maker.

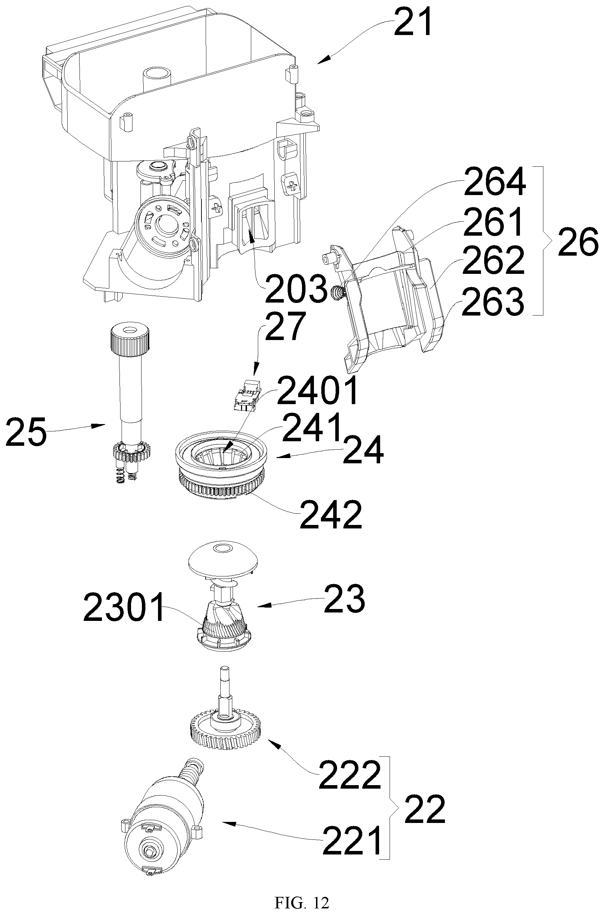

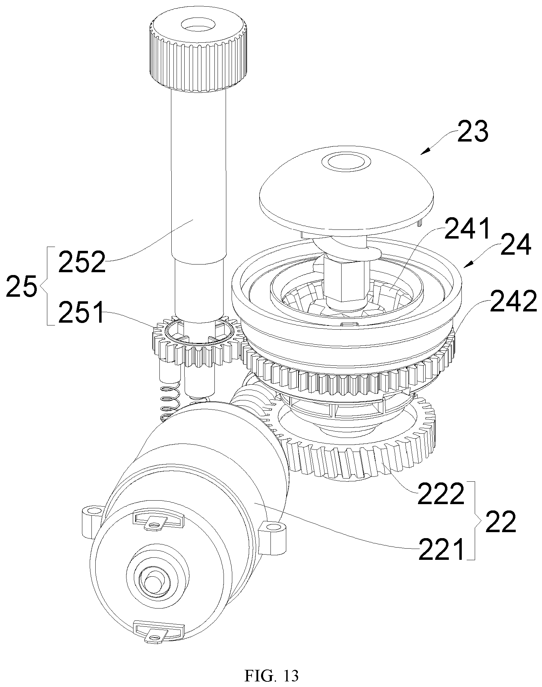

As shown in FIGS. 12 and 13, in addition to features of the above embodiment, it is further defined in this embodiment that the driving assembly 22 includes a driving member 221 and a transmission member 222. The driving member 221 is arranged on the bean grinding frame 21, and the transmission member 222 is in transmission connection with the driving member 221 and the movable grinding head 23 respectively. Arrangement of the driving member 221 on the bean grinding frame 21 provides firm support, thus ensuring stability and reliability of a transmission process. The transmission member 222 is connected with the driving part 221 and the movable grinding head 23, which effectively transmits power, so that the bean grinder can operate efficiently and improve performance of the coffee maker. Design of the driving member 221 and the transmission member 222 makes the whole driving assembly 22 compact and does not occupy too much space. Such compact design facilitates overall layout of the coffee maker, making its appearance more concise and beautiful and also improving stability and reliability of the device.

As shown in FIGS. 12 and 13, in addition to the features of the above embodiment, it is further defined in this embodiment that the external grinding head 24 is provided with a grinding through hole 2401, the movable grinding head 23 penetrates through the grinding through hole 2401, a grinding part 241 is formed at an inner side of the external grinding head 24, a gear part 242 is formed at an outer side of the external grinding head 24, and the coffee maker further includes a bean plucking mechanism 25, and the bean plucking mechanism 25 includes a transmission tooth 251 and a bean plucking rod 252, and the bean plucking mechanism 25 is in transmission connection with the gear part 242. Design of the grinding part 241 of the external grinding head and the movable grinding head 23 ensures that beans can be uniformly ground in the grinding through hole 2401. This can ensure uniformity of bean grinding and make coffee taste more consistent. With transmission connection of the gear part 242 of the external grinding head 24 and the bean plucking mechanism 25, automatic bean plucking in a bean bin can be realized.

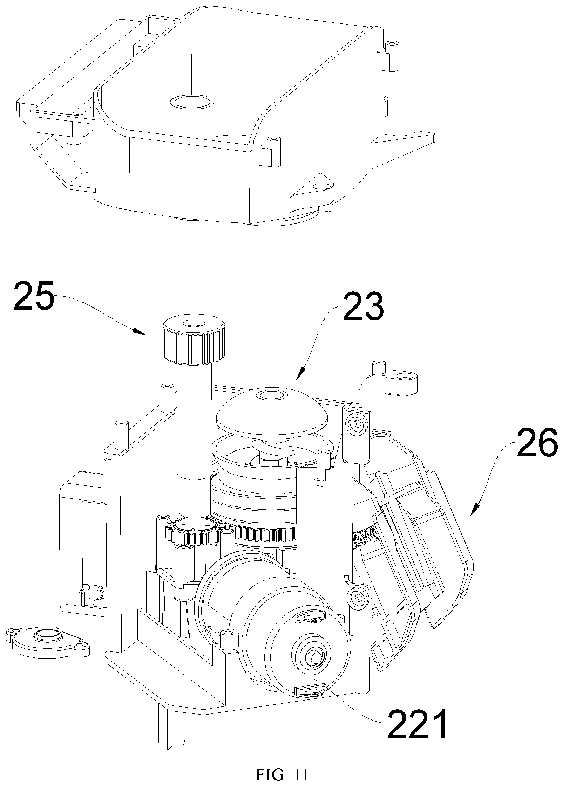

As shown in FIGS. 11 and 12, in addition to the features of the above embodiment, it is further defined in this embodiment that the coffee maker further includes a powder discharging bracket 26, and the powder discharging bracket 26 is movably arranged on the bean grinding frame 21 and is adjacent to the powder outlet 203 and the pressure brewing unit4 respectively. With the powder discharging bracket 26 being located on the bean grinding frame 21 and adjacent to the powder outlet 203, produced coffee powder can be effectively collected. This can prevent the coffee powder from scattering on other components or operation surfaces and keep an operation area clean and tidy. Movable arrangement of the powder discharging bracket 26 makes cleaning more convenient. The users can easily remove the powder discharging bracket for cleaning, and then reinstall it. This can reduce trouble in a cleaning process and improve user experience. The powder discharging bracket 26 is adjacent to the pressure brewing unit4, which can directly convey the coffee powder into the brewer, thus avoiding waste of powder in a transfer process. This design not only improves utilization rate of coffee powder, but also reduces possible waste in a cleaning operations.

As shown in FIGS. 11 and 12, in addition to features of the above embodiment, it is further defined in this embodiment that the powder discharging bracket 26 includes a rotating frame 261, a first top plate 262, a second top plate 263 and a spring 264. The rotating frame 261 is movably arranged on the bean grinding frame 21, the first top plate 262 and the second top plate 263 are arranged on the rotating frame 261 and are located at two sides of the rotating frame 261, and the first top plate 262 and the second top plate 263 are capable of being respectively abutted against the pressure brewing unit4 when the pressure brewing unit4 moves on the housing assembly 1. By movably arranging the rotating frame 261 on the bean grinding frame 21, a stable supporting platform can be provided. The first top plate 262 and the second top plate 263 are arranged on the rotating frame 261 and located at both sides of the rotating frame 261, which can effectively adapt to movement of the pressure brewing unit4. When the pressure brewing unit4 moves on the housing assembly 1, the first top plate 262 and the second top plate 263 can be respectively abutted against the pressure brewing unit4, thus ensuring that the powder discharging bracket 26 rotates under pushing of the pressure brewing unit4, avoiding interference and ensuring that the coffee powder can be accurately transported into the pressure brewing unit4. Provision of the spring 264 can provide appropriate elastic support and ensure that it can automatically reset when rotating.

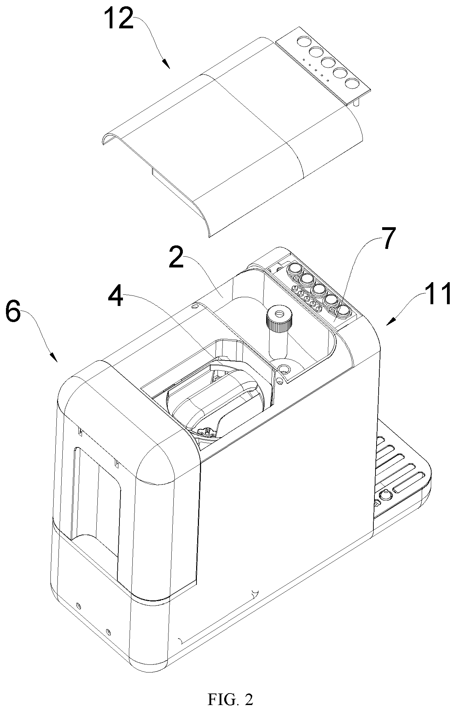

As shown in FIGS. 1 and 2, in addition to features of the above embodiment, it is further defined in this embodiment that the housing assembly 1 includes a housing body 11 and a cover 12. The housing body 11 is provided with a guide cavity 101, the cover 12 is arranged on the housing body 11, and the cover 12 is arranged at an opening of the guide cavity 101. As a main part, the housing body 11 provides structural support and basic framework for the whole coffee maker. The housing body 11 is provided with the guide cavity 101, which provides fixing and guiding functions for other assemblies. As a component covering on the housing body 11, the cover 12 can effectively protect internal mechanical structures and parts and enhance overall structural integrity. Provision of the guide cavity 101 enables the housing assembly 1 to effectively guide installation and movement of other assemblies. This facilitates ensuring that respective assemblies are at correct positions and ensures normal operations of the coffee maker. The cover 12 is arranged at the opening of the guide cavity 101, which can further fix and protect assemblies in the guide cavity 101 from accidental movement or damage.

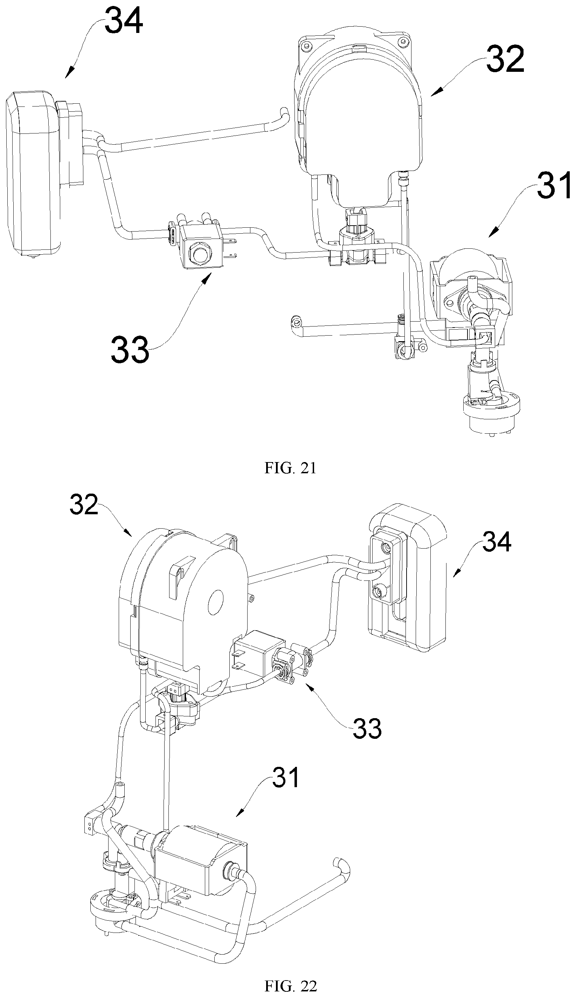

As shown in FIGS. 21, 22 and 23, in addition to features of the above embodiment, it is further defined in this embodiment that the waterway assembly 3 includes a water inlet assembly 31, a heating assembly 32, a water outlet assembly 33 and a water outlet head 34. The water inlet assembly 31 is connected with the heating assembly 32, the heating assembly 32 is respectively connected with the pressure brewing unit4 and the water outlet assembly 33, and the water outlet head 34 is respectively connected with the pressure brewing unit4 and the water outlet assembly 33 through pipelines. The water inlet module 31 is responsible for introducing water into a coffee maker system, and the heating module 32 heats the water to ensure that a water temperature reaches an appropriate brewing temperature. Such design can effectively control flow and temperature of water, thus ensuring brewing quality and taste of coffee. The heating module 32 is not only connected with the pressure brewing unit4, but also connected with the water outlet module 33, which makes the heating module 32 not only provide a heated water source for the pressure brewing unit, but also provide water with a suitable temperature for the water outlet assembly, thus realizing multifunctional waterway design. The water outlet head 34 is respectively connected with the pressure brewing unit4 and the water outlet assembly 33 through the pipelines, and such design can ensure smooth water flow and no leakage. Reasonable layout of pipeline connection can effectively avoid water flow out of control and thus ensure the normal operations of the coffee maker.

As shown in FIGS. 1 and 2, in addition to features of the above embodiment, it is further defined in this embodiment that the coffee maker further includes a water tank 6, and the water tank 6 is detachably arranged on the housing assembly 1 and is communicated with the waterway assembly 3. By detachably arranging the water tank 6 on the housing assembly 1, the users can easily disassemble the water tank to supplement and clean the water source. Such design makes it unnecessary for the users to frequently move the whole coffee maker or use an external container to add water, which improves convenience and comfort of the users. Through connection with the waterway assembly 3, the water tank 6 provides the water source required by the coffee maker. As an independent module, cleaning and maintenance of the water tank 6 can be facilitated. The users can regularly clean interior of the water tank, so as to avoid accumulation of scale and impurities, maintain purity of water, and prolong service life of the coffee maker.

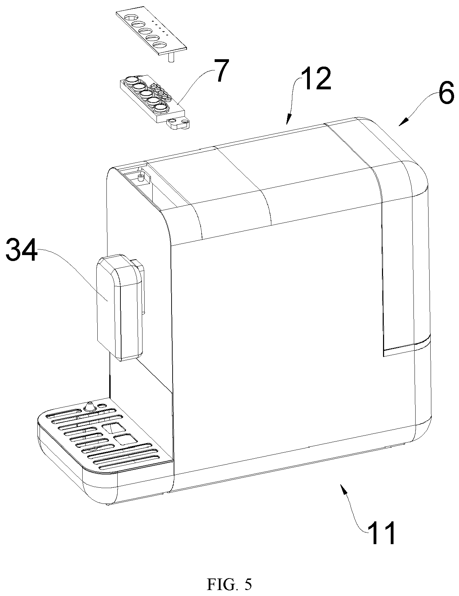

As shown in FIGS. 2 and 5, in addition to features of the above embodiment, it is further defined in this embodiment that the coffee maker further includes a control assembly 7, and the control assembly 7 is arranged on the housing assembly 1 and is electrically connected with the bean grinder 2, the waterway assembly 3, the pressure brewing unit4 and the power drive unit 5. By electrically connecting the control assembly 7 with the bean grinder 2, the waterway assembly 3, the pressure brewing unit4 and the power drive unit 5, unified control of the whole coffee maker system can be realized. This integrated design simplifies operations of the coffee maker, and the user can control all of functions of the coffee maker only by setting the control assembly 7, which improves convenience of use and simplicity of operation.

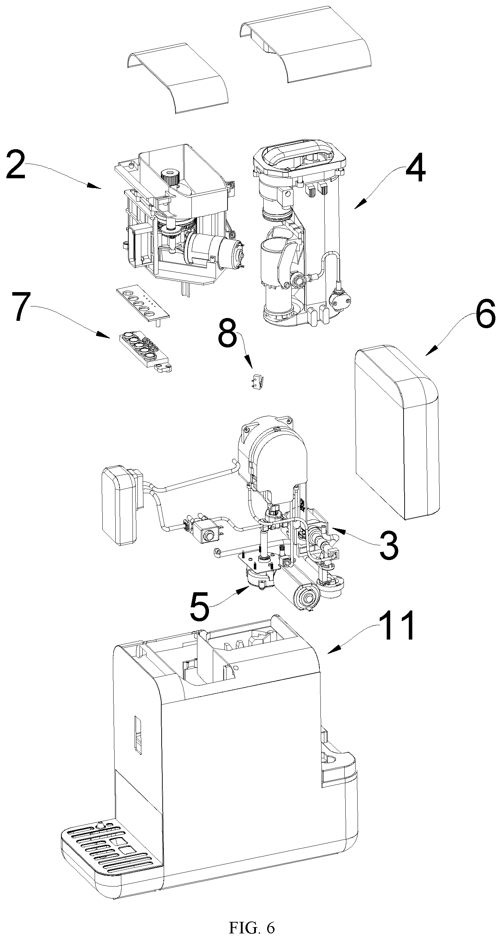

As shown in FIG. 6, in addition to features of the above embodiment, it is further defined in this embodiment that the coffee maker further includes a switch 8, and the switch 8 is arranged on the housing assembly 1 and can be abutted against or separated from the pressure brewing unit4. The switch 8 is arranged on the housing assembly 1, so that the user can easily determine whether the pressure brewing unit4 is installed in place through the switch 8.

The technical features of the above-mentioned embodiments can be combined in an arbitrary manner. For simplicity of description, not all of the possible combinations of the technical features in the embodiments described above are described, however, as long as there is no contradiction between these combinations of the technical features, the combinations should be considered as falling within the scope of this specification.

The above described embodiments only express several implementations of the present disclosure, and their descriptions are more specific and detailed, but they cannot be constructed as limiting a scope of the present invention. It should be noted that, several modifications and improvements can be made by those of ordinary skill in the art without departing from the concept of the present disclosure, which belong to the protection scope of the present disclosure. Therefore, the protection scope of this disclosure shall be subjected to appended claims.

## Claims

1. A coffee maker, comprising:
a housing assembly (1) provided with a guide cavity (101);
a bean grinder (2) provided on the housing assembly (1) and located in the housing assembly (1);
a waterway assembly (3) provided on the housing assembly (1) and configured to be communicated with a water source;
a pressure brewing unit (4) detachably provided on the housing assembly (1) and being capable of moving along the guide cavity (101); and
a power drive unit (5) provided on the housing assembly (1) and located at a bottom of the guide cavity (101); wherein
the pressure brewing unit (4) has at least a first position and a second position relative to the housing assembly (1);
when the pressure brewing unit (4) is located at the first position, the pressure brewing unit (4) is separated from the housing assembly (1), the waterway assembly (3) and the power drive unit (5); and
when the pressure brewing unit (4) is located at the second position, the pressure brewing unit (4) is arranged adjacent to the bean grinder (2), the bean grinder (2) is capable of providing coffee powder for the pressure brewing unit (4), and the pressure brewing unit (4) is installed in a fitted manner with the housing assembly (1), is in transmission connection with the power drive unit (5), and is communicated with the waterway assembly (3), and the waterway assembly (3) is configured to convey liquid into the pressure brewing unit (4) and output liquid in the pressure brewing unit (4).

2. The coffee maker according to claim 1, **characterized in that** the pressure brewing unit (4) comprises a mounting housing (41), a transmission barrel (42), a powder carrier (43), a liquid outlet head assembly (44), a locking assembly (45) and a powder scraping assembly (46), wherein the mounting housing (41) is detachably arranged on the housing assembly (1), the transmission barrel (42) is rotatably arranged on the mounting housing (41), the transmission barrel (42) is capable of being in transmission connection with the power drive unit (5), the powder carrier (43) is movably arranged on the mounting housing (41) and is capable of moving along the mounting housing (41), the powder carrier (43) is in transmission connection with the transmission barrel (42), the powder carrier (43) is provided with a water inlet channel which is in fluid communication with the waterway assembly (3), the liquid outlet head assembly (44) is arranged on the mounting housing (41) and opposite to the powder carrier (43), the liquid outlet head assembly (44) is provided with a water passage channel which is in fluid communication with the waterway assembly (3), and the locking assembly (45) is arranged on the mounting housing (41), the locking assembly (45) is capable of being locked or unlocked with the powder carrier (43), the powder carrier (43) is formed with a powder cavity (401) for accommodating coffee powder or pushing the coffee powder out of the powder cavity (401), and the powder scraping assembly (46) is rotatably arranged on the powder carrier (43).

3. The coffee maker according to claim 2, **characterized in that**
the mounting housing (41) comprises a mounting shell (411), a first ejector rod (412) and a mounting base (413), wherein the first ejector rod (412) and the mounting base (413) are arranged on the mounting shell (411) and at one side of the mounting shell (411), the liquid outlet head assembly (44) is arranged on the mounting shell (411) and at the other side of the mounting shell (411), the locking assembly (45) is arranged on the mounting base (413), and the transmission cylinder (42) is rotatably arranged on the mounting shell (411), the powder carrier (43) is movably arranged on the mounting shell (411) and is capable of moving along the mounting shell (411), the first ejector rod (412) is arranged opposite to the powder scraping assembly (46); when the powder scraping assembly (46) is abutted against the first ejector rod (412), the first ejector rod (412) drives the powder scraping assembly (46) to rotate, the powder scraping assembly (46) comprises a powder scraping frame (461), a scraper (462) and a second ejector rod (463), wherein the powder scraping frame (461) is rotatably arranged on the powder carrier (43), the scraper (462) is arranged on the powder scraping frame (461), and the second ejector rod (463) is arranged on the powder scraping frame (461) and opposite to the first ejector rod (412); and/or
the coffee maker further comprises a water inlet joint (47) arranged on the mounting housing (41) and communicated with the powder carrier (43); and/or
the coffee maker further comprises a connecting seat (48) and a handle (49), wherein the connecting seat (48) is arranged on the mounting housing (41), and the handle (49) is rotatably arranged on the connecting seat (48), and the handle (49) is capable of being locked or separated from the mounting housing (41) when rotating relative to the connecting seat (48).

4. The coffee maker according to claim 2, **characterized in that** the powder carrier (43) comprises an outer sleeve (431), a pressure-bearing inner core (432) and a sliding block (433), wherein the sliding block (433) is arranged on the outer sleeve (431), the sliding block (433) is movably arranged on the mounting housing (41) and is capable of moving along the mounting housing (41), the pressure-bearing inner core (432) is movably arranged in the outer sleeve (431), the outer sleeve (431) has at least a first position, a second position and a third position, and the pressure-bearing inner core (432) has at least a fourth position, a fifth position and a sixth position;
when the outer sleeve (431) is located at the first position, the pressure-bearing inner core (432) is located at the fourth position, the pressure-bearing inner core (432) and the outer sleeve (431) form the powder cavity (401), the liquid outlet head assembly (44) extends into the powder cavity (401), and a powder gap is formed between the liquid outlet head assembly (44) and the pressure-bearing inner core (432);
when the outer sleeve (431) is located at the second position, the pressure-bearing inner core (432) is located at the fifth position, the outer sleeve (431) and the liquid outlet head assembly (44) are arranged at an interval, the pressure-bearing inner core (432) and the outer sleeve (431) form the powder cavity (401), and the pressure-bearing inner core (432) is locked with the locking assembly (45); and
when the outer sleeve (431) is located at the third position, the pressure-bearing inner core (432) is located at the sixth position, the outer sleeve (431) and the liquid outlet head assembly (44) are arranged at an interval, the pressure-bearing inner core (432) is located at an opening of the outer sleeve (431), and the pressure-bearing inner core (432) is locked with the locking assembly (45).

5. The coffee maker according to claim 4, **characterized in that**
the pressure-bearing inner core (432) comprises a sliding column (4321) and a water outlet cover plate (4322), wherein the water outlet cover plate (4322) is arranged on the sliding column (4321), the sliding column (4321) is slidably arranged on the outer sleeve (431), the water outlet cover plate (4322) is arranged on the sliding column (4321), a water passage cavity (402) is formed between the water outlet cover plate (4322) and the sliding column (4321), and a water passage opening (403) is formed on the outer sleeve (431), and when the outer sleeve (431) is located at the first position and the pressure-bearing inner core (432) is located at the fourth position, the water passage cavity (402) is communicated with the water passage opening (403); and/or
the coffee maker further comprises a water inlet joint (434) arranged on the outer sleeve (431) and/or the sliding block (433).

6. The coffee maker according to claim 1, **characterized in that** the bean grinder (2) comprises a bean grinding frame (21), a driving assembly (22), a movable grinding head (23), an external grinding head (24) and a powder discharging bracket (26), wherein the bean grinding frame (21) is arranged on the housing assembly (1) and located in the housing assembly (1), the driving assembly (22) is arranged on the bean grinding frame (21), the movable grinding head (23) is arranged on the driving assembly (22), the external grinding head (24) is rotatably arranged on the bean grinding frame (21), and the external grinding head (24) is arranged to surround the movable grinding head (23), a bean grinding cavity (201) is formed between the external grinding head (24) and the movable grinding head (23), the bean grinding frame (21), the movable grinding head (23) and the external grinding head (24) are enclosed to form a powder passage cavity (202), the powder passage cavity (202) is communicated with the bean grinding cavity (201), and the bean grinding frame (21) is provided with a powder outlet (203).

7. The coffee maker according to claim 6, **characterized in that**
the driving assembly (22) comprises a driving member (221) and a transmission member (222), wherein the driving member (221) is arranged on the bean grinding frame (21), and the transmission member (222) is in transmission connection with the driving member (221) and the movable grinding head (23) respectively; and/or
the external grinding head (24) is provided with a grinding through hole (2401), the movable grinding head (23) penetrates through the grinding through hole (2401), a grinding part (241) is formed at an inner side of the external grinding head (24), a gear part (242) is formed at an outer side of the external grinding head (24), and the coffee maker further comprises a bean plucking mechanism (25), and the bean plucking mechanism (25) comprises a transmission tooth (251) and a bean plucking rod (252), and the bean plucking mechanism (25) is in transmission connection with the gear part (242).

8. The coffee maker according to claim 6, **characterized in that** the coffee maker further comprises a powder discharging bracket (26), and the powder discharging bracket (26) is movably arranged on the bean grinding frame (21) and is adjacent to the powder outlet (203) and the pressure brewing unit (4) respectively.

9. The coffee maker according to claim 8, **characterized in that** the powder discharging bracket (26) comprises a rotating frame (261), a first top plate (262), a second top plate (263) and a spring (264), wherein the rotating frame (261) is movably arranged on the bean grinding frame (21), the first top plate (262) and the second top plate (263) are arranged on the rotating frame (261) and are located at two sides of the rotating frame (261), and the first top plate (262) and the second top plate (263) are capable of being respectively abutted against the pressure brewing unit (4) when the pressure brewing unit (4) moves on the housing assembly (1).

10. The coffee maker according to claim 1, **characterized in that**
the housing assembly (1) comprises a housing body (11) and a cover (12), wherein the housing body (11) is provided with a guide cavity (101), the cover (12) is arranged on the housing body (11), the cover (12) is arranged at an opening of the guide cavity (101); and/or the waterway assembly (3) comprises a water inlet assembly (31), a heating assembly (32), a water outlet assembly (33) and a water outlet head (34), wherein the water inlet assembly (31) is connected with the heating assembly (32), the heating assembly (32) is respectively connected with the pressure brewing unit (4) and the water outlet assembly (33), and the water outlet head (34) is respectively connected with the pressure brewing unit (4) and the water outlet assembly (33) through pipelines; and/or
the coffee maker further comprises a water tank (6), wherein the water tank (6) is detachably arranged on the housing assembly (1) and is communicated with the waterway assembly (3); and/or
the coffee maker further comprises a control assembly (7), wherein the control assembly (7) is arranged on the housing assembly (1) and is electrically connected with the bean grinder (2), the waterway assembly (3), the pressure brewing unit (4) and the power drive unit (5); and/or the coffee maker further comprises a switch (8), wherein the switch (8) is arranged on the housing assembly (1) and is capable of being abutted against or separated from the pressure brewing unit (4).
